# EUROPÄISCHE PATENTSCHRIFT

(11) **EP 1 310 470 B1**
(45) Veröffentlichungstag und Bekanntmachung des Hinweises auf die Patenterteilung: **18.12.2013**
(21) Anmeldenummer: 01125952.0
(22) Anmeldetag: 31.10.2001
(51) Int. Cl.: C05F 17/02

(54) **Vorrichtung zur Intensivverottung von organischem Material, insbesondere von Rohkompost**
Device for decomposing organic material, especially compostable materials
Apareil pour la décomposition des materiaux organiques, en particulier des materiaux compostables

(43) Veröffentlichungstag der Anmeldung: 14.05.2003
(73) Patentinhaber: Kausch, Uwe, 37083 Göttingen (DE); Rühl, Ottomar, Dr. Ing., 06246 Milzau (DE)
(72) Erfinder: Kausch, Uwe, 37083 Göttingen (DE); Rühl, Ottomar, Dr. Ing., 06246 Milzau (DE)
(74) Vertreter: Rehberg Hüppe + Partner

(56) Entgegenhaltungen:
- WO-A1-94/27931
- WO-A1-95/13254
- DE-A- 3 642 626
- DE-U- 8 512 279
- FR-A- 1 302 793
- FR-A- 1 597 432
- US-A- 4 414 335

## Beschreibung

Die Erfindung bezieht sich auf eine Vorrichtung zur Intensivverrottung von organischem Material, insbesondere von Rohkompost, mit den Merkmalen des Oberbegriffs des unabhängigen Patentanspruchs 1.

Eine Vorrichtung der eingangs beschriebenen Art wird im Kompostwerk Göttingen betrieben. Hier ist der Rottetunnel nicht nur gegenüber einem Entweichen von ungefilterter Abluft abgedichtet sondern auch thermisch isoliert, und er weist einen Spaltboden auf, wobei über die Spalte in dem Spaltboden Sickerwasser aus dem Rohkompost abläuft und Luft zur Zwangsdurchlüftung des Rohkomposts angesaugt oder ausgeblasen wird. Die Förderung des Rohkomposts durch den Rottetunnel erfolgt durch eine auf Schienen im oberen Bereich des Rottetunnels verfahrbare Umwälzeinrichtung, die den auf dem Spaltboden liegenden Rohkompost an Ihrer Vorderseite aufnimmt und an ihrer Hinterseite um ihre Arbeitslänge versetzt wieder abwirft. Durch das wiederholte Überfahren des Rohkomposts mit der Umwälzeinrichtung wird der Rohkompost von dem Eingabeende des Rottetunnels zu dessen Ausgabeende bewegt. Dort wird der Rohkompost aufgenommen und je nach seiner Zusammensetzung ggf. noch einer Nachrotte unterworfen. Hierzu sind separate Einrichtungen vorgesehen. Bei dem Betrieb der bekannten Vorrichtungen stellt sich heraus, dass das Umwälzen des Rohkomposts in dem Rottetunnel nicht unbedingt vorteilhaft ist, weil durch den Umwälzvorgang eine Abkühlung des Rohkomposts erfolgt, so dass thermisch aktivierte Prozesse erheblich verzögert werden. Daneben stellt sich heraus, dass neben den Anschaffungskosten auch der Wartungsaufwand für die Umwälzeinrichtung ganz beträchtlich ist, da diese einer chemisch sehr aggressiven Arbeitsumgebung ausgesetzt ist. Weiterhin reduziert die Bau- und Arbeitshöhe der Umwälzeinrichtung die nutzbare Höhe des Rottetunnels. Der Rottetunnel selbst ist durch seinen zwar nur teilweise nutzbaren aber relativ großen thermisch isolierten Querschnitt selbst ebenfalls kostenaufwändig. Darüberhinaus ist beachtlich, dass bei der bekannten Vorrichtung das organische Material nach seiner Intensivverrottung in dem Rottetunnel für eine Nachrotte aufwändig zu Nachrottemieten aufgesetzt werden muss, da der Rohkompost ohne eine Nachrotte noch nicht verwertbar ist. Letztlich kann durch die Förderung des Rohkomposts durch den Rottetunnel zwar das Fördern des Rohkomposts durch verschiedene Behandlungsstationen bewirkt werden, die in der Längserstreckungsrichtung des Rottetunnels aufeinanderfolgen.

Dabei ist aber keine vollständige Abstimmung dieser einzelnen Behandlungsstufen auf die jeweilige Zusammensetzung des Rohkomposts möglich, da der Rohkompost durch seine ständige Umwälzung in seiner Zusammensetzung in gewissem Umfang homogenisiert wird, wobei die konkrete Zusammensetzung selbst bei genauer Kenntnis der Ausgangszusammensetzung nicht mehr nachvollziehbar ist.

Neben Vorrichtungen und Verfahren, die von einem Rottetunnel Gebrauch machen, sind auch Vorrichtungen und Verfahren zur Intensivverrottung von organischem Material bekannt, bei denen Container verwendet werden, in die das organische Material eingefüllt wird und in denen das organische Material einer Abfolge von Rotteschritten unterzogen wird. Ein Beispiel dazu wird in der DE 15 92 781 A1 gegeben. Hier wird eine Mehrzahl von derartigen Containern zu einer Ringzelle zusammengefasst, die mit Laufrädern über eine Schienenkreisbahn geführt werden kann, um die einzelnen Container nacheinander an einer Beschickungsstation und einer Entladungsstation entlang zu führen. Nachteilig bei einer solchen Anordnung ist, dass die gesamten Belüftungs- und Klimatisierungsaufwendungen an jedem einzelnen Container getätigt werden müssen, selbst wenn die Ringzelle in einer Halle betrieben wird, die die Aufrechterhaltung einer gewissen Mindesttemperatur in der Ringzelle erleichtert. Eine individuelle Nachrotte des Inhalts einzelner Container der Ringzelle ist überdies nicht möglich, da jeder Container zwangsweise entleert und wieder neu befüllt wird, wenn er an der Entleerungs- bzw. Befüllungsstation entlangkommt.

Die aus der DE 1 592 781 A1 und der parallelen FR-A 1 597 432 bekannten Container weisen ein Dach mit einem Ventilatorschacht und einem Ventilator auf, mit dem ein Luftstrom von oben nach unten durch den Container gedrückt werden kann, um im unteren Bereich des Containers angereicherte Kohlensäure zu entfernen. Die Kohlensäure entweicht dann durch Bodenöffnungen des Containers. Die Bodenöffnungen sind mit einem kaminartigen Rand an einer Haube versehen, damit kein Material in sie eindringt.

Aus der DE 95 12 279 U ist eine Vorrichtung mit den Merkmalen des Oberbegriffs des unabhängigen Patentanspruchs 1 bekannt. Ein Reaktionstunnel besteht aus luftdichten Seitenwänden und einem von einem Maschendrahtgeflecht und einer Holzschnipselschicht getragenen, luftdurchlässigen Hochbeet. Im Reaktionstunnel befinden sich verfahrbare Behälter zur Kompostierung von organischem Material. Die für eine aerobe Verrottung notwendige Zuluft wird mit Hilfe eines Gebläses über eine Rohrleitung in einen Stutzen des jeweils zuletzt eingeschobenen Behälters eingeblasen. Ein Teil der Zuluft verlässt das innerhalb des Behälters liegende, perforierte Belüftungsrohr und steigt durch das organische Material auf, der restliche Teil der Zuluft wird dem benachbarten Behälter zugeführt. Die aus den Behältern aufsteigende feuchtwarme und kohlendioxidreiche Abluft kann aufgrund des natürlichen Wärmeauftriebs durch das Hochbeet hindurchdiffundieren. Sie kann aber auch mit Hilfe eines Rohrleitungssystems und eines Gebläses unter ein parallel zum Reaktionstunnel befindliches Flachbeet gepumpt werden, durch das sie dann ebenfalls aufsteigt. Reaktionstunnel und Flachbeet befinden sind innerhalb eines Gewächshauses.

Aus der US-A 4,414,335 ist ein Kompostierungssystem mit beweglichen Containern bekannt. Diese Container weisen einen perforierten doppelten Boden auf, wobei Druckluft über die Perforationen des doppelten Bodens in das darauf befindliche organische Material eingeblasen werden kann.

Der Erfindung liegt die Aufgabe zugrunde, eine Vorrichtung der eingangs beschriebenen Art aufzuzeigen, die mit vergleichsweise geringem Aufwand realisierbar sind und dennoch die Einstellung optimaler Bedingungen für eine Intensivverrottung unter Berücksichtigung der Zusammensetzung des zu verrottenden organischen Materials erlaubt.

Die Aufgabe wird durch eine Vorrichtung mit den Merkmalen des unabhängigen Patentanspruchs 1 gelöst.

Die Erfindung kombiniert die bekannten Verfahren der Tunnelkompostierung und der Containerkompostierung. Genutzt wird der Rottetunnel zur Einstellung der gewünschten Temperatur- bzw. Zwangsdurchlüftungszustände. Zum Fördern des Materials durch den Rottetunnel wird jedoch von Containern Gebrauch gemacht. Diese Container können von sehr einfachem Aufbau sein, da sie zu nichts anderem dienen, als das organische Material durch den Rottetunnel hindurchzufördern. Der Rottetunnel selbst ist auch einfacher als im Stand der Technik aufbaubar, da eine Umwälzeinrichtung in dem Rottetunnel nicht nehr verwendet wird. Das organische Material wird ganz bewusst ohne Umlagerung durch den Rottetunnel hindurchgeführt, um gewünschte, thermisch aktivierte Prozesse nicht zu behindern. Darüberhinaus weisen die einzelnen Container in dem Rottetunnel bei der Erfindung eine definierte Zusammensetzung des Containerinhalts auf. Die einzelnen, aufeinanderfolgenden Temperatur- und/oder Zwangsdurchlüftungszustände können daher optimal auf den jeweiligen Containerinhalt abgestimmt werden. So kann beispielsweise bei stärker keimbelastetem Material besonders darauf geachtet werden, dass das Material längere Zeit bei höherer Temperatur gehalten wird, um seine Entkeimung sicherzustellen. Ebenso kann eine bestimmte Temperaturführung in dem Rottetunnel verwendet werden, um z. B. verrottbare Kunststoffe in einzelnen Containern definiert zu behandeln. Trotz des Zusatzaufwands für die Container ist die Erfindung mindestens genauso wirtschaftlich wie eine bekannte Tunnelkompostierung, weil der Aufwand für die Umwälzeinrichtung, insbesondere deren Wartungsaufwand entfällt, und weil die nutzbare Höhe innerhalb des Rottetunnels anwächst. Darüberhinaus ist zu berücksichtigen, dass der Rottetunnel mit dem zu verrottenden organischen Material nicht mehr direkt in Berührung kommt, sondern nur noch die einzelnen Container.

Bei der Erfindung wird zur Einstellung der Zwangsdurchlüftungszustände Umgebungsluft in den Rottetunnel eingeblasen und durch die Container und ein Biofilter hindurch abgelassen werden. So wird der Rottetunnel zwar unter Überdruck gegenüber der Umgebung betrieben, was die Gefahr eines Entweichens ungefilterter Abluft aus dem Rottetunnel erhöht. Die Luft in dem Rottetunnel außerhalb der Container ist aber, bevor sie durch das organische Material in den Containern hindurchtritt, noch nicht stark belastet. Gleichzeitig kann mit dem Überdruck in dem Rottetunnel auf druckstabilisierte Leichtkonstruktionen für den Rottetunnel zurückgegriffen werden.

Ein weiterer Vorteil der Erfindung ergibt sich dadurch, dass die Container nach dem Verlassen des Rottetunnels direkt für eine Nachrotte genutzt werden können und zwar je nach dem, welcher Inhalt sich in dem jeweiligen Container befindet. Hierzu reicht es im Prinzip aus, die Container nach dem Verlassen des Rottetunnels nach oben hin abzudecken und dann stehen zu lassen.

Bei der erfindungsgemäßen Vorrichtung sind durch den Rottetunnel hindurch verfahrbare offene Container zur Aufnahme von organischem Material vorgesehen. Diese Container sind idealerweise speziell an den jeweiligen Rottetunnel angepasst. Sie weisen Lochböden auf, um das Austreten von Sickerwasser und eine vertikale Durchlüftung zu ermöglichen.

Um der aggressiven chemischen Umgebung in dem Rottetunnel widerstehen zu können, sind die Container vorzugsweise aus Edelstahl ausgebildet. Dies ist zwar mit gewissen Kosten verbunden. Dabei ist aber zu berücksichtigen, dass die Container einen sehr einfachen Aufbau aufweisen können, so dass ihr Kostenaufwand nicht übermäßig ist.

Um die Container durch den Rottetunnel hindurchzufördern, können die Container mit Schienenrädern versehen sein, wobei Schienen für die Container durch den Rottetunnel verlegt sind. Idealerweise sind die Schienenräder der Container dabei oberhalb einer Aufstandfläche der Container angeordnet, so dass sie wie übliche Container ohne eine Gefahr der Beschädigung der Schienenräder auf den Boden abgestellt oder auch mit üblichen Containertransportfahrzeugen gehandhabt werden können.

Um die Container durch den Rottetunnel zu fördern, kann mindestens eine motorisch antreibbare Förderkette durch den Rottetunnel verlaufen, an die die Container anhängbar sind. Es versteht sich, dass die durch den Rottetunnel verlaufende Förderkette eine Endloskette ist und aus möglichst korrosionsbeständigem Material besteht.

Insbesondere um einen vorhandenen Rottetunnel voll auszunutzen, ist es von Vorteil, wenn die Container den wesentlichen vertikalen Querschnitt des Rottetunnels abdecken.

Günstig ist es auch, wenn die Container den wesentlichen horizontalen Querschnitt des Rottetunnels abdecken. Dabei geht es nicht nur um eine möglichst optimale Ausnutzung des Rottetunnels sondern auch um eine möglichst optimale Luftführung in vertikaler Richtung durch den Rottetunnel, die nicht an den Containern vorbei sondern gezielt durch diese hindurch verläuft.

Als Förderungsmaßnahme für eine gezielte Luftführung durch die einzelnen Container können Dichtmittel vorgesehen sein, um einen oder mehrere Container abgedichtet an eine Belüftungseinrichtung des Rottetunnels anzuschließen. Dabei können diese Dichtmittel auch so konstruiert sein, dass sie erst nach der Positionierung des jeweiligen Containers über der Belüftungseinrichtung aktiviert werden. Dies kann beispielsweise durch expandierbare Dichtmittel geschehen, die durch denselben Luftdruck expandiert werden, der auch zur Zwangsdurchlüftung eines Containerinhalts verwendet wird.

In einer besonders preiswerten Ausführungsform der neuen Vorrichtung wird der Rottetunnel im Querschnitt von einer Bodenplatte nach unten und nach oben von einer Plane begrenzt. Dabei kann die Plane durchaus eine solche sein, die an sich keine nennenswerte thermische Isolierung des Innenraums des Rottetunnels bewirkt. Sie dient ausschließlich der Begrenzung des Innenraums des Rottetunnels, um sicherzustellen, dass sämtliche Abluft aus dem Rottetunnel durch das Biofilter geführt wird. Die Bodenplatte stellt sicher, dass kein belastetes Sickerwasser aus dem verrottenden organischen Material den Rottetunnel unkontrolliert nach unten verlässt.

Für die Plane kann eine Tragkonstruktion vorgesehen sein, die den Querschnitt des Rottetunnels mechanisch stabilisiert. Besonders bevorzugt ist es jedoch, wenn ein Einblasventilator der Belüftungseinrichtungen Umgebungsluft in den Rottetunnel einbläst, so dass die Plane durch einen Überdruck in dem Rottetunnel getragen wird. Durch Überdruck stabilisierte Hallen und Zelte sind grundsätzlich bekannt. Bei der neuen Vorrichtung werden durch die Druckstabilisierung jedoch besondere Vorteile erzielt. Durch den Wegfall einer Tragkonstruktion für die Plane muss diese weder innerhalb des Rottetunnels angeordnet werden, wo sie einer korrosiven Umgebung ausgesetzt ist, noch muss die Plane aufwendig an einer äußeren Tragkonstruktion befestigt werden. Die Plane kann vielmehr auf ihre Resistenz gegenüber der Atmosphäre im inneren des Rottetunnels optimiert werden. Darüber hinaus ist ein Einblasventilator gegenüber einem Absaugventilator zum Absaugen aus dem Rottetunnel insofern von Vorteil, als dass er überhaupt nicht der korrosiven Atmosphäre im Inneren des Rottetunnels ausgesetzt wird.

Wenn zudem das Biofilter von dem Einblasventilator aus gesehen stromab der Container und damit stromab des verrottenden organischen Materials angeordnet ist, ist die Luft im Inneren des Rottetunnels, bevor sie in das organische Material eintritt, relativ wenig belastet. So ist die Atmosphäre in dem Rottetunnel weniger aggressiv, und in dem Falle, dass ungefilterte Abluft aus dem Rottetunnel aufgrund des darin herrschenden Überdrucks austritt, sind die resultierenden Emissionen allenfalls gering.

Der in dem Rottetunnel aufzubauende Überdruck, um eine hinreichende Durchströmung des organischen Materials in den Containern und des Biofilters zu erreichen, ist bei der neuen Vorrichtung ausreichend, um die den Rottetunnel nach oben begrenzende Plane anzuheben und definiert auszuwölben, damit ein definierter freier Querschnitt des Rottetunnels zur Verfügung steht.

Die Erfindung wird im folgenden anhand von Ausführungsbeispielen näher erläutert und beschrieben, dabei zeigt
- Fig. 1: einen Längsschnitt durch eine erste Ausführungsform der erfindungsgemäßen Vorrichtung zur Intensivverrottung von Rohkompost,
- Fig. 2: einen Querschnitt durch eine zweite Ausführungsform der erfindungsgemäßen Vorrichtung und
- Fig. 3: einen Querschnitt durch eine dritte Ausführungsform der erfindungsgemäßen Vorrichtung.

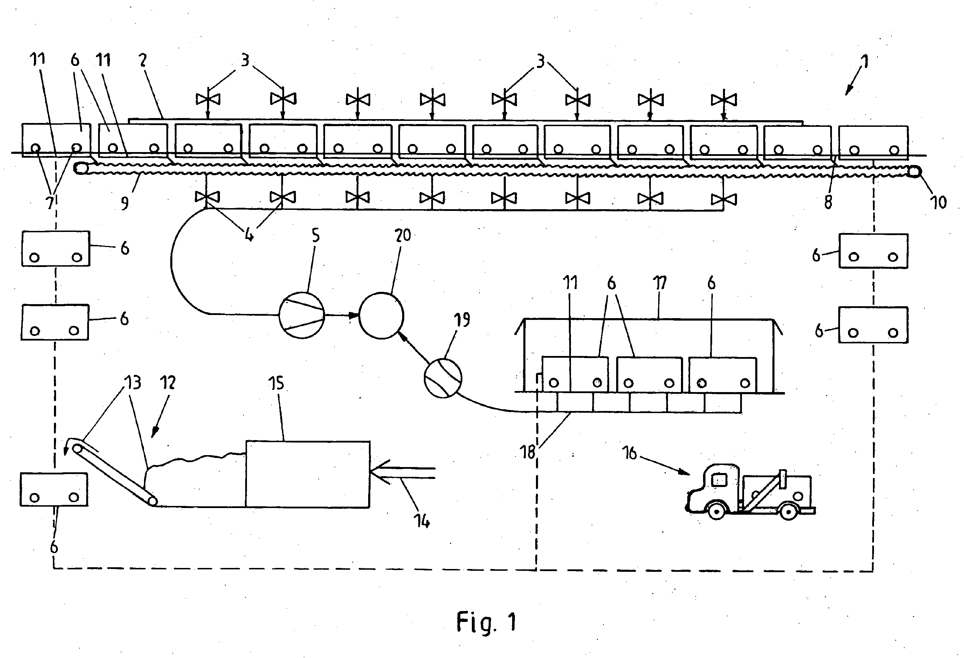

Die in Fig. 1 schematisch dargestellte Vorrichtung 1 weist als wesentlichen Bestandteil einen Rottetunnel 2 auf. Der Rottetunnel 2 ist mit einer hier nicht im Detail ersichtlichen thermischen Isolierung versehen. Weiterhin verfügt der Rottetunnel 2 über Belüftungseinrichtungen 3 bis 5, die als wesentliche Bestandteile regelbare Luftzufuhren 3, regelbare Luftabfuhren 4 und einen Absaugventilator 5 aufweisen. Der Luftabsaugventilator 5 saugt Luft über die regelbaren Luftabfuhren 4 an. In Abstimmung auf die Regelung der Luftabfuhren 4 werden auch die Luftzufuhren 3 geregelt. Dabei ist diese Regelung zur Einstellung unterschiedlicher Zwangsdurchlüftungszustände über die Länge des Rottetunnels 2 hinweg nicht unbedingt notwendig. Sie sorgt aber dafür, dass unerwünschte Längsströmungen durch den Rottetunnel 2 verhindert werden können. Die Durchlüftung des Rottetunnels 2 dient neben der Sauerstoffversorgung der Abfuhr von Sickerwasser und, was ganz wesentlich ist, der Einstellung gewünschter Temperaturen in den aufeinanderfolgenden Bereichen des Rottetunnels 2. Die in dem Rottetunnel 2 erfolgende Intensivverrottung von organischem Material ist exotherm. Durch die Belüftung des Rottetunnels wird die hieraus resultierende Erwärmung des organischen Materials nach oben begrenzt.

Das organische Material wird in Containern 6 durch den Rottetunnel 2 geführt. Die Container 6 laufen auf Laufrädern 7 über durch den Rottetunnel 2 verlegte Schienen 8. Gezogen werden sie von einer umlaufenden Förderkette 9, die durch einen Motor 10 angetrieben wird. Die in dem Rottetunnel 2 eingestellten Temperatur- und Zwangsdurchlüftungszustände werden auf den Inhalt der jeweiligen Container 6 abgestimmt. Beim Hindurchführen der Container 6 durch den Rottetunnel 2 ist kein kontinuierlicher Durchlauf bevorzugt. Vielmehr werden die Container intervallweise versetzt, wobei jeder Container in eine neue Behandlungsstation überführt wird, in der derselbe oder vorzugsweise ein anderer Temperatur- und/oder Zwangsdurchlüftungszustand eingestellt wird, wie in seiner vorherigen Behandlungsstation. In jeder Behandlungsstation können die Container 6 dichtend an die jeweilige Luftabfuhr 4 angeschlossen werden, um seitliche Umströmungen der Container zu verhindern. Damit die Container 6 in der gewünschten vertikalen Richtung durchströmbar sind, weisen sie jeweils einen Lochboden 11 auf, wobei die Durchbrechungen in dem Lochboden 11 hier nicht dargestellt sind. Dargestellt ist aber, dass die Laufräder 7 über dem Lochboden 11 der Container nach oben versetzt angeordnet sind, so dass die Container 6 auf dem Boden abgestellt werden, ohne dass die Laufräder 7 die Aufstandfläche berühren. D.h., die Container 6 können wie übliche Container gehandhabt und abgestellt werden, ohne dass die Gefahr eines ungewollten Wegrollens besteht.

Eine Beschickungsstation 12 für die Container 6 mit Rohkompost 13 kann unabhängig von dem Rottetunnel 2 angeordnet werden. Es ist auch nicht notwendig, dass die Container 6 unmittelbar nach ihrer Beschickung mit Rohkompost 13 in den Rottetunnel 2 eingebracht werden. Bei dem Rohkompost 13 kann es sich um Biomüll 14 handeln, der in einer Vorkonditionierungseinrichtung 15 zerkleinert und anderweitig vorkonditioniert werden kann.

Die Container 6, die aus dem Rottetunnel 2 heraustreten, können sofort entleert werden, um den verrotteten Rohkompost abschließend zu konditionieren und beispielsweise in kleinen Gebinden abzupacken. Sie können auch mit einen Containertransportfahrzeug 16 zu einer entfernten Verarbeitung oder Nutzung des Rohkomposts überführt werden. In einer besonders interessanten Verfahrensvariante wird der Inhalt der Container 6 aber noch einer Nachrotte unterworfen, indem die Container 6 unter ein Abdach 17 untergestellt werden, die das Eindringen von Regenwasser in die Container 6 von oben verhindert, wobei die Container 6 über ihre Lochböden 11 an eine Absaugeinrichtung 18 mit einem Absaugventilator 19 angeschlossen werden, um das Austreten von Geruchsemission aus den Containern 6 zu verhindern. Sowohl die Abluft des Absaugventilators 19 als auch diejenige des Abluftventilators 5 wird dabei auf ein Biofilter 20 gegeben, bevor sie in die Umgebung entlassen wird.

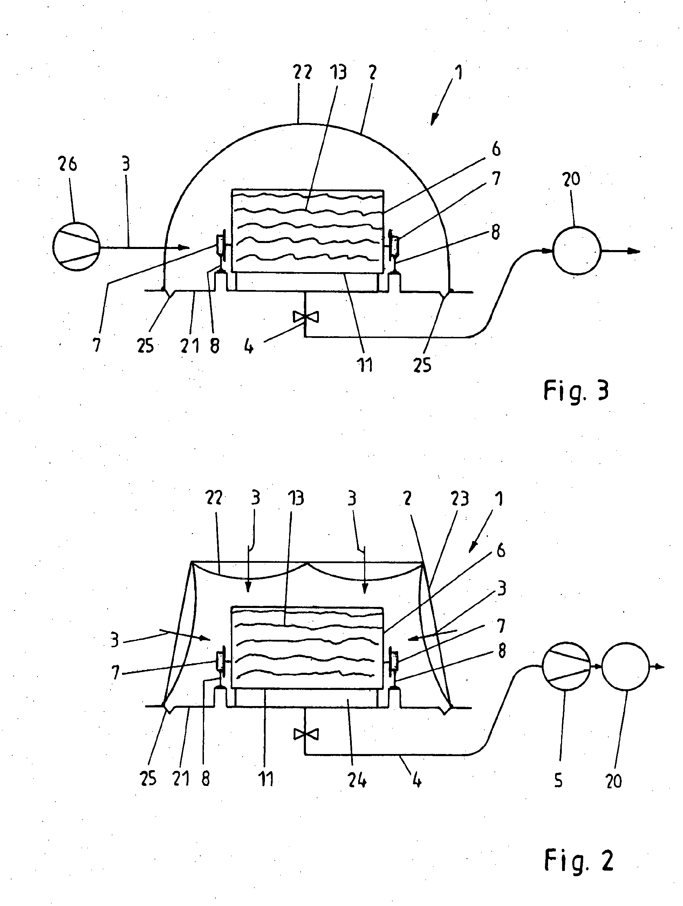

In der Ausführungsform gemäß Fig. 1 wird das Innere des Rottetunnels 2 durch die Absaugung über den Absaugventilator 5 unter Unterdruck gehalten. Hierdurch wird ein Austreten von ungefilterter Abluft aus dem Rottetunnel 2 verhindert. Dasselbe gilt für die Ausführungsform der Vorrichtung 1, die in Fig. 2 im Querschnitt durch den Rottetunnel 2 dargestellt ist. Während Fig. 1 von einem herkömmlichen thermisch isolierten Rottetunnel 2 mit massiven Wänden und einer festen Dachkonstruktion ausgeht, ist der Rottetunnel 2 gemäß Fig. 2 von einfacherem Aufbau. Begrenzt wird der freie Querschnitt des Rottetunnels 2 hier durch eine Bodenplatte 21 nach unten und eine Plane 22 seitlich und nach oben. Die Plane 22 ist an einer äußeren Tragkonstruktion 23 aufgehängt. Die Tragkonstruktion 23 ist so nicht der agressiven Atmosphäre im Inneren des Rottetunnels 2 ausgesetzt. Die Plane 22 ist hier entweder von separaten Luftzufuhren 3 durchsetzt, oder die Plane 22 ist selbst begrenzt luftdurchlässig, um eine Luftzufuhr zu realisieren. Die Luftabfuhr aus dem Rottetunnel 2 erfolgt durch Absaugung mit dem Absaugventilator 5, wobei die zugeführte Luft über den Rohkompost 13 in dem Container 6, durch den Lochboden 11 des Containers 6 und durch einen Verteiler 24 unterhalb des Containers 6 gesogen wird. Die Luft in dem Rottetunnel 2 ist so vor ihrem Durchtritt durch den Container 6 noch relativ wenig belastet. Soweit dennoch Schwitzwasser an der nicht isolierten Plane 22 auskondensiert, tropft dieses entweder auf den Rohkompost 13 und gelangt so in die Sickerwasserabfuhr für das Sickerwasser aus dem Rohkompost 13 oder es läuft seitlich in Schwitzwasserrinnen 25 ab. Die neue Vorrichtung 1 ist auch ohne eine thermische Isolierung des Rottetunnels 2 funktionsfähig, d.h. auch ohne eine thermische Isolierung wird die notwendige Temperatur in dem Rohkompost 13 über ausreichend lange Zeit erreicht, um eine Hygienisierung des Rohkomposts 13 zu bewirken. Dabei ist zu berücksichtigen, dass die Luft in dem Rottetunnel 2 um den Container 6 herum ihrerseits eine Wärmeisolierung darstellt, und dass bei herkömmlichen Rottetunneln die thermische Isolierung auch dazu dient, das Auftreten von Schwitzwasserkondensationen zu verhindern. Diese Schwitzwasserkondensationen werden hier hingenommen, da sie auf eine chemisch beständige Plane 22 keinen Einfluss haben.

Die Ausführungsform der Vorrichtung 1 gemäß Fig. 3 unterscheidet sich von derjenigen gemäß Fig. 2 dadurch, dass für die Plane 22 keine Tragkonstruktion 23 vorgesehen ist. Statt dessen wird hier der Innenraum des Rottetunnels 2 auf einem gewissen Überdruck gehalten. Dies geschieht dadurch, dass ein Einblasventilator 26 statt des Absaugventilators 5 vorgesehen ist. Der Einblasventilator 26 bläst Luft aus der Umgebung in das Innere des Rottetunnels 2 ein und realisiert so die Luftzufuhr 3. Aus dem Inneren des Rottetunnels 2 dort geht die Luft denselben Weg wie in Fig. 2, nämlich durch den Rohkompost 13, durch den Lochboden 11 und über die Luftabfuhr 4 in den Biofilter 20. Durch den Strömungswiderstand auf diesem Strömungsweg baut sich in dem Rottetunnel 2 ein Überdruck von einigen 10 Pascal auf, der ausreichend ist, um die Plane 22 zu tragen bzw. gegenüber der Umgebung definiert nach oben auszuwölben. Die Plane 22 muss nur an der Bodenplatte 21 luftdicht befestigt sein. Bei der Vorrichtung 1 gemäß Fig. 3 herrscht im Inneren des Rottetunnels 2 zwar ein Überdruck, dennoch wird selbst bei einem Leck in der Plane 22 nicht unbedingt kontaminierte Luft aus dem Inneren des Rottetunnels 2 ausgeblasen, weil die Luft vor ihrem Durchtreten durch den Rohkompost 13, wonach sie direkt in den Biofilter 20 gelangt, noch nicht nennenswert belastet ist.

### BEZUGSZEICHENLISTE

- 1: - Vorrichtung
- 2: - Rottetunnel
- 3: - Luftzufuhr
- 4: - Luftabfuhr
- 5: - Absaugventilator
- 3 - 5: - Belüftungseinrichtung
- 6: - Container
- 7: - Laufrad
- 8: - Schiene
- 9: - Förderkette
- 10: - Motor

- 11: - Lochboden
- 12: - Beschickungseinrichtung
- 13: - Rohkompost
- 14: - Biomüll
- 15: - Konditionierungseinrichtung
- 16: - Containertransportfahrzeug
- 17: - Abdach
- 18: - Absaugeinrichtung
- 19: - Absaugventilator
- 20: - Biofilter

- 21: - Bodenplatte
- 22: - Plane
- 23: - Tragkonstruktion
- 24: - Absaugverteiler
- 25: - Schwitzwasserrinne
- 26: - Einblasventilator

## Patentansprüche

1. Vorrichtung (1) zur Intensivverrottung von organischem Material, insbesondere von Rohkompost (13), mit einem Rottetunnel (2) und mit durch den Rottetunnel (2) hindurch verfahrbaren offenen Containern (6) zur Aufnahme des organischen Materials, wobei der Rottetunnel (2) mit Belüftungseinrichtungen (3-5) ausgestattet ist, um das Material in den Containern (6) mit den Belüftungseinrichtungen (3-5) des Rottetunnels (2) zu durchlüften, wobei die Belüftungseinrichtungen (3-5) die gesamte Abluft aus dem Rottetunnel durch ein Biofilter (20) führen, **dadurch gekennzeichnet, dass** die Container (6) Lochböden (11) aufweisen, wobei jeder Container (6) mit dem Lochboden (11) an seiner Unterseite endet, so dass die Container (6) in vertikaler Richtung durchströmbar sind, und dass die Belüftungseinrichtungen (3-5) des Rottetunnels (2) regelbare Luftzufuhren (3) und regelbare Luftabfuhren (4) aufweisen, um in der Förderrichtung der Container (6) aufeinander folgende Zwangsdurchlüftungszustände des Rottetunnels (2) einzustellen, wobei die Luft aus dem Inneren des Rottetunnels (2) jeweils durch das organische Material, durch den Lochboden (11) und über die Luftabfuhr (4) in den Biofilter (20) geht.

2. Vorrichtung nach Anspruch 1, **dadurch gekennzeichnet, dass** die Container (6) aus Edelstahl ausgebildet sind.

3. Vorrichtung nach einem der Ansprüche 1 und 2, **dadurch gekennzeichnet, dass** die Container (6) mit Laufrädern (7) versehen sind und dass Schienen (8) für die Container (6) durch den Rottetunnel (2) verlegt sind.

4. Vorrichtung nach Anspruch 3, **dadurch gekennzeichnet, dass** die Laufräder (7) der Container (6) oberhalb einer Aufstandfläche der Container (6) angeordnet sind.

5. Vorrichtung nach einem der Ansprüche 1 bis 4, **dadurch gekennzeichnet, dass** mindestens eine motorisch antreibbare Förderkette (9) durch den Rottetunnel (2) verläuft, an die die Container (6) anhängbar sind.

6. Vorrichtung nach einem der Ansprüche 1 bis 5, **dadurch gekennzeichnet, dass** die Container (6) den wesentlichen vertikalen Querschnitt und/oder den wesentlichen horizontalen Querschnitt des Rottetunnels (2) abdecken.

7. Vorrichtung nach einem der Ansprüche 1 bis 6, **dadurch gekennzeichnet, dass** Dichtmittel vorgesehen sind, um einen oder mehrere der Container (6) abgedichtet an eine der Luftabfuhren (4) anzuschließen.

8. Vorrichtung nach einem der Ansprüche 1 bis 7, **dadurch gekennzeichnet, dass** der Rottetunnel (2) im Querschnitt von einer Bodenplatte () und einer Plane (22) begrenzt wird.

9. Vorrichtung nach Anspruch 8, **dadurch gekennzeichnet, dass** eine Tragkonstruktion (23) für die Plane (22) vorgesehen ist.

10. Vorrichtung nach Anspruch 8, **dadurch gekennzeichnet, dass** ein Einblasventilator (26) der Belüftungseinrichtungen Umgebungsluft in den Rottetunnel (2) einbläst, so dass die Plane (22) durch einen Überdruck in dem Rottetunnel (2) getragen wird.

11. Vorrichtung nach Anspruch 10, **dadurch gekennzeichnet, dass** das Biofilter (20) von dem Einblasventilator (26) aus gesehen stromab der Container (6) angeordnet ist.

## Claims

1. Device (1) for intensively decomposing organic material, particularly raw compost (13), comprising a rotting tunnel (2) and open containers (6) for receiving organic material, which are moveable through the rotting tunnel (2), wherein the rotting tunnel (2) is equipped with aerating appliances (3-5) to aerate the material in the containers (6) with the aerating appliances (3-5) of the rotting tunnel (2), wherein the aerating appliances (3-5) lead the entire exhaust air from the rotting tunnel through a biofilter (20), **characterized in that** the containers (6) comprise perforated bottoms, wherein each container (6) ends at its lower side with the perforated bottom (11) such that a flow may pass through the containers (6) in vertical direction, and that the aerating appliances (3-5) of the rotting tunnel (2) comprise controllable air inlets (3) and controllable air outlets (4) to adjust forced aeration states of the rotting tunnel (2) following each other in the forwarding direction of the containers (6), wherein the air out of the interior of the rotting tunnel (2) always passes through the organic material, through the perforated bottom (11) and through the air outlet (4) into the biofilter (20).

2. Device of claim 1, **characterized in that** the containers (6) are made of stainless steel.

3. Device of any of the claims 1 and 2, **characterized in that** the containers (6) are provided with bottom rollers (7), and that rails (8) for the containers (6) are laid through the rotting tunnels (2).

4. Device of claim 3, **characterized in that** the bottom rollers (7) of the containers (6) are arranged above a contact plane of the containers (6).

5. Device of any of the claims 1 to 4, **characterized in that** at least one motor driven forwarding chain (9) runs through the rotting tunnel (2), to which the containers (6) may can be attached.

6. Device of any of the claims 1 to 5, **characterized in that** the containers (6) cover the essential vertical cross section and/or the essential horizontal cross section of the rotting tunnel (2).

7. Device of any of the claims 1 to 6, **characterized in that** sealing means are provided to connect one or more containers (6) to the air outlets (4) in a sealed way.

8. Device of any of the claims 1 to 7, **characterized in that** the rotting tunnel (2), in its cross section, is delimited by a base plate and an awning (22).

9. Device of claim 8, **characterized in that** a supporting structure (23) is provided for the awning (22).

10. Device of claim 8, **characterized in that** an in-blowing ventilator (26) of the aerating appliances blows air out of the surroundings into the rotting tunnel (2) such that the awning (22) is supported by an over pressure in the rotting tunnel (2).

11. Device of claim 10, **characterized in that** the biofilter (20), from a point of view of the inblowing ventilator (26), is arranged downstream of the containers (6).

## Revendications

1. Appareil (1) pour la décomposition intensive de matériaux organiques, en particulier de matériaux compostables (13), comprenant un tunnel de décomposition (2) et des conteneurs ouverts (6) pouvant être déplacés à travers le tunnel de décomposition (2) destinés à recevoir les matériaux organiques, étant entendu que le tunnel de décomposition (2) est équipé de dispositifs de ventilation (3-5) pour faire circuler l'air à travers les matériaux dans les conteneurs (6) au moyen des dispositifs de ventilation (3-5), étant entendu que les dispositifs de ventilation (3-5) conduisent la totalité de l'air extrait du tunnel de décomposition (2) à travers un filtre biologique (20), **caractérisé en ce que** les conteneurs (6) présentent des fonds perforés (11), étant entendu que chaque conteneur (6) se termine avec le fond perforé (11) au niveau de son côté inférieur de sorte qu'une circulation peut s'effectuer dans le sens vertical à travers les conteneurs (6), et **en ce que** les dispositifs de ventilation (3-5) du tunnel de décomposition (2) présentent des arrivées d'air réglables (3) et des évacuations d'air réglables (4) pour régler des états de ventilation forcée du tunnel de décomposition (2) se succédant dans le sens d'avancée des conteneurs (6), étant entendu que l'air circule depuis l'intérieur du tunnel de décomposition (2), à travers les matériaux organiques, à travers le fond perforé (11) et jusqu'au filtre biologique (20) par le biais de l'évacuation d'air (4).

2. Appareil selon la revendication 1, **caractérisé en ce que** les conteneurs (6) sont réalisés en acier inoxydable.

3. Appareil selon l'une des revendications 1 et 2, **caractérisé en ce que** les conteneurs (6) sont munis de roues porteuses (7) et **en ce que** des rails (8) sont posés à travers le tunnel de décomposition (2) pour les conteneurs (6).

4. Appareil selon la revendication 3, **caractérisé en ce que** les roues porteuses (7) des conteneurs (6) sont agencées au-dessus d'une bande de contact des conteneurs (6).

5. Appareil selon l'une des revendications 1 à 4, **caractérisé en ce qu'**au moins un convoyeur à chaîne (9) pouvant être entraîné par un moteur, auquel les conteneurs (6) peuvent être suspendus, s'étend à travers le tunnel de décomposition (2).

6. Appareil selon l'une des revendications 1 à 5, **caractérisé en ce que** les conteneurs (6) couvrent la section essentiellement verticale et/ou la section essentiellement horizontale du tunnel de décomposition (2).

7. Appareil selon l'une des revendications 1 à 6, **caractérisé en ce que** des moyens d'étanchéité sont prévus pour raccorder un ou plusieurs des conteneurs (6) de façon étanche à l'une des évacuations d'air (4).

8. Appareil selon l'une des revendications 1 à 7, **caractérisé en ce que** le tunnel de décomposition (2) est délimité dans sa section par une plaque de fond () et une bâche (22).

9. Appareil selon la revendication 8, **caractérisé en ce qu'**une structure portante (23) est prévue pour les bâches (22).

10. Appareil selon la revendication 8, **caractérisé en ce qu'**un ventilateur de soufflage (26) des dispositifs de ventilation souffle de l'air ambiant dans le tunnel de décomposition (2) de telle sorte que les bâches (22) sont portées par une surpression dans le tunnel de décomposition (2).

11. Appareil selon la revendication 10, **caractérisé en ce que** le filtre biologique (20), vu depuis le ventilateur de soufflage (26), est agencé en aval des conteneurs (6).
